# EUROPEAN PATENT APPLICATION

(11) **EP 4 779 540 A1**
(43) Date of publication of application: **22.07.2026**
(21) Application number: 25219894.0
(22) Date of filing: 01.12.2025
(51) Int. Cl.: G06Q 10/0637, G06Q 10/0639

(54) **ENVIRONMENT EVALUATION DEVICE AND ENVIRONMENT EVALUATION METHOD**

(30) Priority: 16.01.2025 JP 2025005858
(71) Applicant: Hitachi, Ltd., Tokyo 100-8280 (JP)
(72) Inventor: NISHIDE, Akinori, Tokyo, 100-8280 (JP); TANABE, Yosuke, Tokyo, 100-8280 (JP); MIYAKOSHI, Junichi, Tokyo, 100-8280 (JP); KATO, Takeshi, Tokyo, 100-8280 (JP); WATANABE, Koichi, Tokyo, 100-8280 (JP); MINE, Ryuji, Tokyo, 100-8280 (JP)
(74) Representative: Mewburn Ellis LLP

(57) **Abstract**

An environment evaluation device (1) of the present invention approximates, using a non-linear model (32), time-series relations among an objective variable serving as a criterion for calculating a biodiversity credit and explanatory variables of an analysis target, evaluates a degree of a fluctuation and a symmetry of the fluctuation of the objective variable based on the approximated non-linear model (32), estimates an interaction between the explanatory variables of the analysis target based on the approximated non-linear model (32), estimates a time point at which a value of the objective variable converges in the non-linear model (32), and the value of the objective variable which converges, based on a result of the evaluation of the degree of the fluctuation and the symmetry of the fluctuation, as well as, the estimated interaction, and evaluates, based on the value of the objective variable which converges, a change amount of the objective variable which non-linearly transitions relative to the explanatory variables of the analysis target.

## Description

### BACKGROUND OF THE INVENTION

### 1. Field of the Invention

The present invention relates to an environment evaluation device and an environment evaluation method.

### 2. Description of the Related Art

Recently, the effects of the global warming due to carbon dioxide and the like emitted in conjunction with socioeconomic activities have become significant, efforts for decarbonization to alleviate this have been studied worldwide. These efforts are efforts to reduce the amounts of greenhouse gases such as carbon dioxide to be emitted to the atmosphere (efforts on the emission side) and efforts to increase the amounts of greenhouse gases, which were once emitted, to be captured from the atmosphere (efforts on the capture side).

Among these, the efforts on the capture side are called DAC (Direct Air Capture), and as representative examples thereof, DAC with a forest ecosystem and DAC with a marine ecosystem are known. In the DAC with a forest ecosystem, companies and the like, increase forest areas through conservation actions such as afforestation, for example to obtain biodiversity credits corresponding to the increases. In the DAC with a marine ecosystem, companies and the like increase the abundances of population of algae through conservation actions such as water quality improvement, for example, to obtain biodiversity credits corresponding to the increases.

Biodiversity credits are compensation rights for contributions of companies and the like to the capture of greenhouse gases. Companies and the like can recover the money which the companies and the like invested for capturing greenhouse gases by selling the right (biodiversity credits) through the market. In that sense, the biodiversity credits are similar to carbon credits in the efforts on the emission side.

There is an attempt to accurately predict or calculate the value of such biodiversity credit based on conservation actions conducted by a company or the like. An environment monitoring system of WO2017/088040 estimates a true value on water quality in the past by analyzing data distribution through time-series data analysis on environmental data (specifically, water quality).

### SUMMARY OF THE INVENTION

In the efforts on the emission side, the amount of emission of greenhouse gases and the amount of a carbon credit are in a proportional relation. Here, the "amount" is an imaginary unit which is multiplied by a monetary value. Even if both amounts are not in an accurate proportional relation, these are in a relation of simple increases in which if the amount of emission of greenhouse gases increases, the amount of the carbon credit also increases. Such a relation is called "linear". On the other hand, in the efforts on the capture side, a relation between an operational variable (for example, an afforestation area) of conservation actions and the amount of a biodiversity credit is not linear.

There is a "non-linearity" that is unique to living organisms. For example, it takes a long period of time for trees to sufficiently grow and become capable of conducting sufficient photosynthesis after afforestation, and natural conditions (air temperature, rain, pest damages, and the like) during the period are also not uniform. For example, after afforestation, while the target land is taking on an appearance like a "savanna", the level of the captured amount of greenhouse gases is very low, and the increase rate is also low. However, when sufficient years have elapsed, and the target land is taking on an appearance like a "forest", the level of the captured amount of greenhouse gases becomes very high, and the increase rate becomes high. That is, there exists a period of time during which the relation between the operational variable of conservation actions and the amount of the biodiversity credit changes randomly in a complex manner, and before and after this period of time, the level of the captured amount of greenhouse gases drastically changes.

Even if natural conditions are uniform, a response of an ecosystem to a conservation activity by a person is not linear. For example, in the case where a conservation action of spraying a fertilizer to a savanna was executed, the state of the savanna is still maintained constant for a certain period of time, and thereafter drastically changes to a forest. The term "non-linear" also encompasses such mean.

The environment monitoring system of WO2017/088040 does not consider the above-described non-linearity. In view of this, an object of the present invention is to evaluate, with high accuracy, a conservation action on an ecosystem which non-linearly responses to the conservation action (Equilibrium 1: a savanna-Equilibrium 2: a forest, and the like).

An environment evaluation device of the present invention comprises: an input processing unit which receives environmental information on an environment of a site which is an analysis target, and an objective variable serving as a criterion for calculating a biodiversity credit, in the environmental information; an environment evaluation processing unit which sets a non-linear model having, as output, the objective variable, and as input, a plurality of explanatory variables indicating an amount or quality of a conservation action which is performed by a person on an ecosystem, in the environmental information, receives explanatory variables of the analysis target which are extracted by a user from among the plurality of explanatory variables, approximates, with the non-linear model, time-series relations among the objective variable and the explanatory variables of the analysis target by learning with time-series past values of the objective variable and the explanatory variables of the analysis target, evaluates a degree of a fluctuation and a symmetry of the fluctuation of the objective variable based on the approximated non-linear model, estimates an interaction between the explanatory variables of the analysis target based on the approximated non-linear model, estimates a time point at which a value of the objective variable converges in the non-linear model, and the value of the objective variable which converges, based on a result of the evaluation of the degree of the fluctuation and the symmetry of the fluctuation, as well as the estimated interaction, and evaluates, based on the value of the objective variable which converges, a change amount of the objective variable which non-linearly transitions relative to the explanatory variables of the analysis target; and an output processing unit which displays the change amount of the objective variable which has changed by the time point at which the value of the objective variable converges.

The other means will be described in DETAILED DESCRIPTION OF THE EMBODIMENTS.

The present invention makes it possible to evaluate, with high accuracy, a conservation action on an ecosystem which non-linearly responses to the conservation action.

### BRIEF DESCRIPTION OF THE DRAWINGS

FIG. 1 is a diagram showing a configuration of an environment evaluation device.
FIG. 2 is a diagram for explaining a transition period of an environmental indicator.
FIG. 3 is a diagram for explaining relations among explanatory variables.
FIG. 4 is a diagram for explaining transition of an objective variable in the transition period.
FIG. 5 is a diagram for explaining a degree of a fluctuation and a symmetry of the fluctuation.
FIG. 6 is a diagram for explaining an equilibrium point transition.
FIG. 7 is a flowchart of a processing procedure.

### DETAILED DESCRIPTION OF THE EMBODIMENTS

Hereinafter, an embodiment (referred to as a "present embodiment") of the present invention will be described in detail by using the drawings.

### (Terms)

An ecosystem is a collection of living organisms which contribute to the capture of greenhouse gases such as carbon dioxide. The ecosystem generates oxygen and glucose from carbon dioxide and water through photosynthesis.

Environmental information is time-series physical quantities which measurement instruments (sensors and the like) obtain from an ecosystem and its surrounding environment. In many cases, the environmental information is associated with a site which is an analysis target, such as a zoned specific forest or ocean.

A conservation action is an effort which a person (an individual or a corporation) conducts on an ecosystem for the purpose of capturing greenhouse gases.

An objective variable is a time-series indicator indicating a capability of an ecosystem to capture greenhouse gases in the environmental information. In the case where this capability is high, it means that the amounts and the number of types of living organisms present in the ecosystem are excellent. As a result, the amount of a biodiversity credit also becomes large. In general, an indicator serving as a criterion for calculating a biodiversity credit is called an "environmental indicator". This environmental indicator can be an objective variable for a model, which will be described later. The objective variable is another name of an environmental indicator in the case of assuming the use of a model.

An explanatory variable is a time-series indicator indicating the amount or quality of a conservation action which a person conducts on an ecosystem. There is also a case where a plurality of explanatory variables correspond to one objective variable. The explanatory variable may be environmental information, or may be a management indicator other than environmental information.

A model is a function to output a certain value of an objective variable in response to input of certain values of explanatory variables. There is also a case where for two-dimensional input, output is one-dimensional. For example, "Y=F(X₁,X₂)" is a function (model) where Y represents an objective variable, and X₁ and X₂ represent explanatory variables. A typical model of the present embodiment is a non-linear model. Here, since an objective variable and explanatory variables are time-series indicators as described above, it is possible to partially differentiate each of an objective variable and explanatory variables of a model with respect to time.

An interaction between explanatory variables is correlation between explanatory variables in the case where there are a plurality of explanatory variables.

A fluctuation of an objective variable is dispersion of the objective variable which fluctuates over time. The dispersion is defined for each time window. Note that the dispersion can be replaced with a fluctuation range (an amplitude of a waveform).

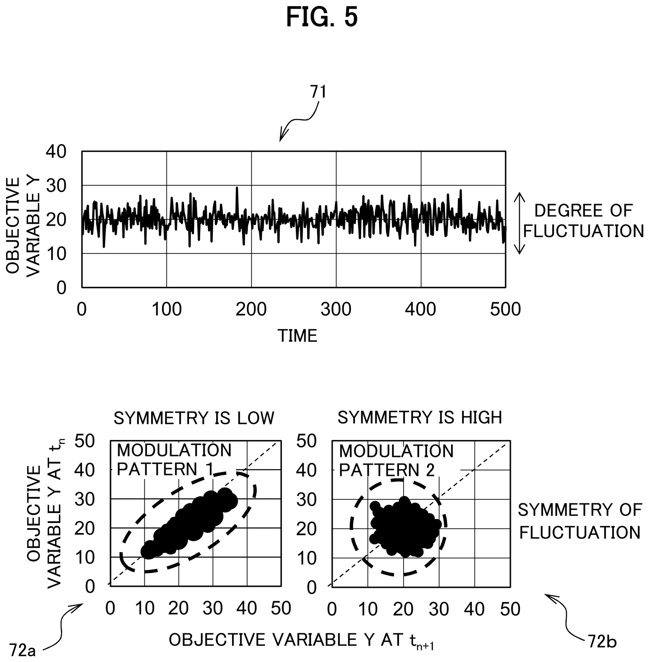

A symmetry of a fluctuation is appearance of sample points on a coordinate plane using, as axes, a value of a certain objective variable at time point t and a value of the objective variable at time point t+1. In the case where sample points are distributed along a 45-degree line, the symmetry is low, while in the case where sample points are concentrated in surroundings of a certain point on a 45-degree line, the symmetry is high (the detail will be described later in FIG. 5). Note that the 45-degree line is a line serving as a rough indication for the symmetry of appearance of sample points on the coordinate plane (symmetry line) . In the present embodiment, the symmetry line is a line which extends through the origin and has a slope of 45 degrees, and is thus called the 45-degree line; however, the slope and the like are not limited to this.

In DAC in a marine ecosystem, for example, the concentration of reactive nitrogen, the concentration of phosphoric acid, and the like serve as explanatory variables, and pH (the concentration of hydrogen ions), the amount of dissolved oxygen, the population of a specific surrogate species, the amount of DNA (Deoxyribo Nucleic Acid) of a specific surrogate species, and the like serve as objective variables. In DAC in a forest ecosystem, for example, NDVI (Normalized Difference Vegetation Index) of a land, the concentration of carbon dioxide in the atmosphere, and the like serve as explanatory variables, and the amount of carbon stored in the land serves as an objective variable.

### (Biodiversity Credit)

Firstly, values which should be grounds for a biodiversity credit will be briefly described. The ecosystems bring benefits to the economic activities of human beings. For example, if there were no supply of fresh air, the human beings could not conduct the economic activities. Such "blessings of nature", so to speak, are called "ecosystem services". Then, it can also be said that the biodiversity credit is a compensation for maintaining these ecosystem services.

The ecosystem services include provisioning services, regulating services, cultural services, supporting (habitat) services, and the like. The carbon pools of forests, the maintenance of water qualities, and the like are examples of the regulating services. The provisions of foods, raw materials, fuels, fresh water, and the like are examples of the provisioning services. What is used to evaluate these ecosystem services is a biodiversity credit.

### (Configuration of Environment Evaluation Device)

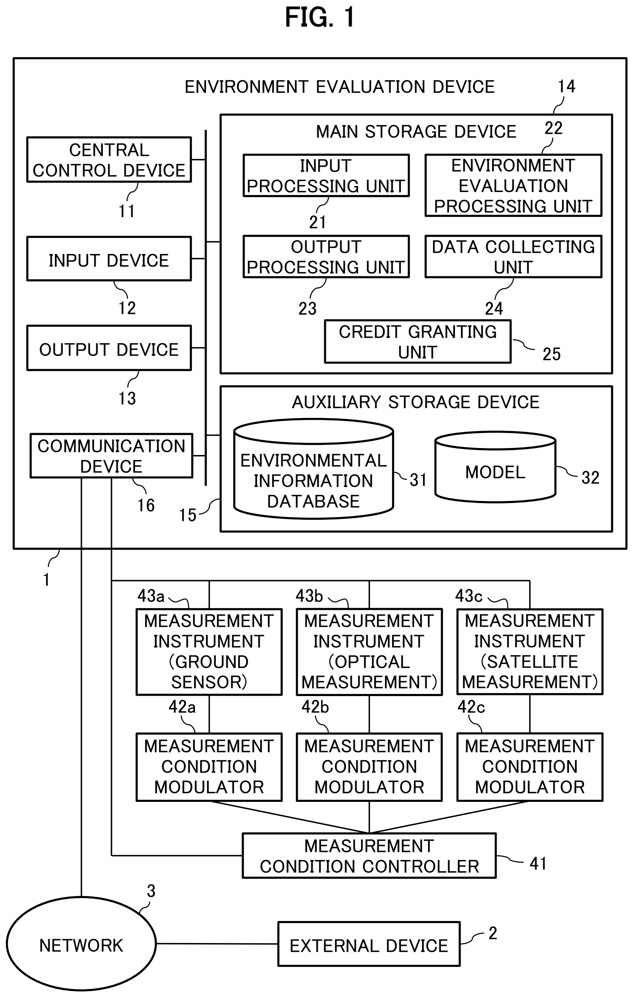

FIG. 1 is a diagram showing a configuration of an environment evaluation device 1. The environment evaluation device 1 is a general computer. The environment evaluation device 1 includes a central control device 11, an input device 12 such as a mouse and a keyboard, an output device 13 such as a display, a main storage device 14, an auxiliary storage device 15, and a communication device 16. An input processing unit 21, an environment evaluation processing unit 22, an output processing unit 23, a data collecting unit 24, and a credit granting unit 25 of the main storage device 14 are programs. In the following description, in the case where a given subject is stated with a name ending with "unit", this means that the central control device 11 reads out a program from the auxiliary storage device 15 onto the main storage device 14, and executes processing (described later in detail) which is described in the program in advance. The auxiliary storage device 15 stores an environmental information database 31 and a model 32.

An external device 2 is connected to the environment evaluation device 1 via a network 3. The external device 2 stores environmental information measured by the user of the environment evaluation device 1 and other business operators. Measurement instruments 43a, 43b, and 43c are disposed in sites where the environmental information should be obtained. Among these, the measurement instrument 43a is a ground sensor, and measures, for example, the concentration of carbon dioxide and the like of a forest in time series. The measurement instrument 43b is an optical measurement instrument, and measures, for example, the number of trees, the thicknesses of the trees, and the like in a forest in time series. The measurement instrument 43c is a satellite measurement instrument, and measures, for example, the phase, density, and the like of a forest from geosynchronous satellites in time series. Each of the measurement instruments 43a, 43b, and 43c transmits environmental information obtained on its own to the environment evaluation device 1. The external device 2 may store environmental information obtained a company on its own. In this mean, the external device 2 means any desired device other than the environment evaluation device 1.

Measurement condition modulators 42a, 42b, and 42c are present corresponding to the measurement instruments 43a, 43b, and 43c. A measurement condition controller 41 receives, from the environment evaluation device 1, control instructions to the measurement instruments 43a, 43b, and 43c, and transmits the control instructions to the measurement instruments 43a, 43b, and 43c via the measurement condition modulators 42a, 42b, and 42c at appropriate timings. The control instruction includes a timing to obtain environmental information and a duration, and the like.

As a result of communications of data as described above, the environmental information database 31 of the auxiliary storage device 15 accumulates various pieces of environmental information in various sites in time series.

### (Transition Period of Environmental Indicator)

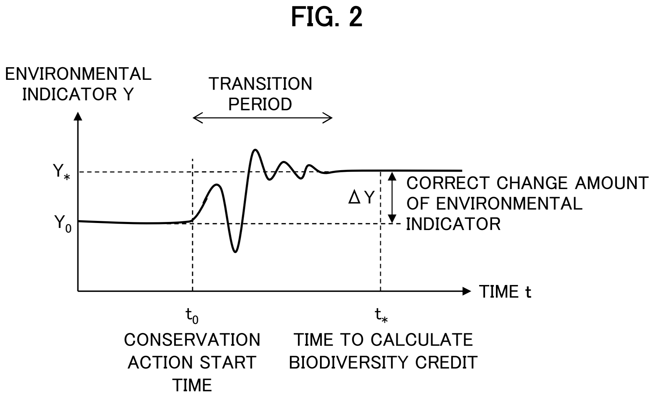

FIG. 2 is a diagram for explaining a transition period of an environmental indicator. The horizontal axis of FIG. 2 indicates time, and the vertical axis of FIG. 2 indicates the environmental indicator. During the period of time before time point t₀ when the conservation action starts, the environmental indicator is stable at a certain level Y₀. After the time t₀, the conservation action is conducted in a planned and consistent way. However, after the time t₀, the environmental indicator transitions in a complicated manner. During some period of time after the time t₀, the environmental indicator irregularly repeats abrupt increase and decrease. This period of time is called a "transition period". The environmental indicator during the transition period is significantly unstable, and cannot be used as a criterion for calculating a biodiversity credit. After some period of time has elapsed since the transition period, the environmental indicator is stabilized (converges) again at another certain level Y_{*}. The timing at which the result of the conservation action correctly appears is after a time t_{*}. Then, the result (increase) of the conservation action is ΔY=Y_{*}-Y₀. The amount of the biodiversity credit is calculated based on ΔY as a criterion.

### (Relations Among Explanatory Variables)

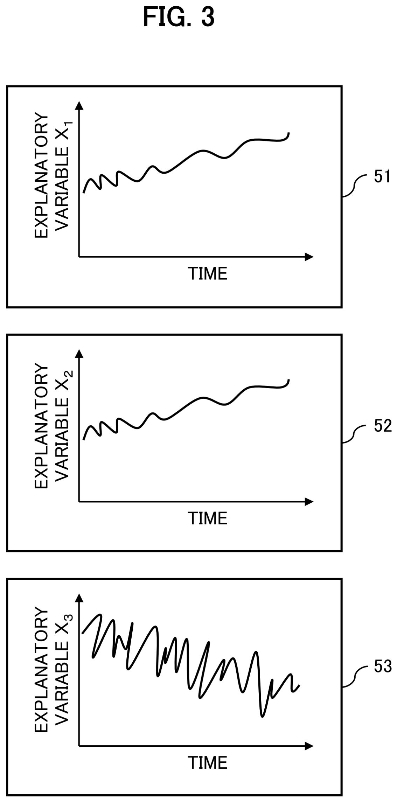

FIG. 3 is a diagram for explaining relations among explanatory variables. Now, it is assumed that there are three explanatory variables X₁, X₂ and X₃ for one objective variable. A graph 51 shows a time-series change of the explanatory variable X₁ among these. A graph 52 shows a time-series change of the explanatory variable X₂ among these. A graph 53 shows a time-series change of the explanatory variable X₃ among these.

When attention is paid to the graph 51 and the graph 52, the explanatory variable X₁ and the explanatory variable X₂ are almost the same in terms of the way of change and the level relative to the time axis. When attention is paid to the graph 51 and the graph 53, the explanatory variable X₁ and the explanatory variable X₃ are completely different in terms of the way of change and the level relative to the time axis. When attention is paid to the graph 52 and the graph 53 as well, the same applies. From the above, it can be said that the interaction between the explanatory variable X₁ and the explanatory variable X₂ is strong, and the interaction between the explanatory variable X₁ and the explanatory variable X₂, and the explanatory variable X₃ is weak. The strength of the interaction between two explanatory variables can be obtained by calculating the correlation between the two explanatory variables. Note that in the case where the above-described model is a dynamical model, the calculation of the correlation means nothing other than the calculation of a coefficient of a differential equation of the dynamical model. That is, the calculation of the interaction (correlation) between two explanatory variables serves a factor in determining the shape of the model "Y=F(X₁,X₂)" in the coordinate space.

### (Transition of Objective Variable in Transition Period)

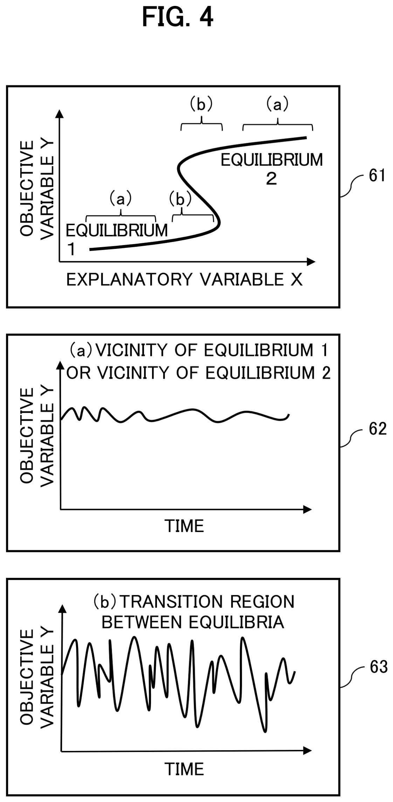

FIG. 4 is a diagram for explaining a transition of an objective variable in a transition period. A graph 61 shows a relation between an explanatory variable X and an objective variable Y. In the case where the value of the explanatory variable X is sufficiently small, the value of the objective variable Y is stable ((a) Equilibrium 1). In the case where the value of the explanatory variable X is sufficiently large as well, the value of the objective variable Y is stable ((a) Equilibrium 2). However, the value of the objective variable Y itself is far larger in Equilibrium 2 than in Equilibrium 1.

When the value of the explanatory variable X is between Equilibrium 1 and Equilibrium 2 (b), the value of the objective variable Y irregularly repeats increase and decrease, but increases in the long term. The S-shaped portion of the curve indicates this.

A graph 62 shows a time-series transition of the objective variable Y in the vicinity of Equilibrium 1 or the vicinity of Equilibrium 2 (a). In these vicinities, the objective variable Y is stable at a certain level. That is, the degree of a fluctuation (the dispersion or the amplitude of a waveform) of the objective variable is small.

A graph 63 shows a time-series transition of the objective variable Y in a region between the vicinity of Equilibrium 1 and Equilibrium 2 (b). In this region, the objective variable Y is fluctuating in a short cycle and large dispersion (amplitude). That is, the degree of a fluctuation of the objective variable is large.

By calculating such degree of a fluctuation of the objective variable, it can be determined whether or not the objective variable is in equilibrium (convergence). Note that in the case where the above-described model is a dynamical model, the calculation of the degree of a fluctuation means nothing other than the calculation of a magnitude of change in time derivative of a differential equation of the dynamical model.

### (Degree of Fluctuation and Symmetry of Fluctuation)

FIG. 5 is a diagram for explaining a degree of a fluctuation and a symmetry of the fluctuation. A graph 71 shows a time-series transition of the objective variable Y. The graph 71 is fundamentally the same as the graph 62 and the graph 63 of FIG. 4. Specifically, in the graph 71, the value of the objective variable Y falls within a range of approximately ±5 about "20" as the center. In this mean, it can be said that the degree of the fluctuation in the graph 71 is small (close to the example of the graph 62).

The vertical axis of the graph 72a and the graph 72b indicates the value of the objective variable Y at time point tₙ, and the horizontal axis indicates the value of the objective variable Y at time point tₙ₊₁. Then, in these graphs, a "symmetry line (45-degree line)" which connects points where the value of the vertical axis and the value of the horizontal axis are equal to each other is drawn.

Now, for example, it is assumed that in the graph 71, the waveform is transitioning toward the upper right, the level at the left end of the waveform is "10", and the level at the right end of the waveform is "30". In this case, points indicating combinations of the value of the objective variable Y at time point tₙ and the value of the objective variable Y at time point tₙ₊₁ gather around a line segment connecting a point "(10,10)" and a point "(30,30)" on the symmetry line as in the graph 72a. For the convenience of description, such transition of the objective variable Y is called a "modulation pattern 1".

As another example, it is assumed that in the graph 71, the waveform is transitioning horizontally about a certain level (for example, "20") as the center. In this case, points indicating combinations of the value of the objective variable Y at time point tₙ and the value of the objective variable Y at time point tₙ₊₁ gather around a point "(20,20)" on the symmetry line as in the graph 72b. For the convenience of description, such transition of the objective variable Y is called a "modulation pattern 2".

More generally, four modulation patterns can be assumed with combinations of how large the degree of a fluctuation is and how high the symmetry of the fluctuation is.

### <Modulation pattern 1: the degree of a fluctuation is small, and the symmetry of the fluctuation is low.>

The objective variable Y is stable in a short cycle, and the level thereof is fluctuating in a longer cycle.

### <Modulation pattern 2: the degree of a fluctuation is small, and the symmetry of the fluctuation is high.>

The objective variable Y is stable in a short cycle, and the level thereof is stable in a longer cycle.

### <Modulation pattern 3: the degree of a fluctuation is large, and the symmetry of the fluctuation is low.>

The objective variable Y is largely fluctuating in a short cycle, and the level thereof is fluctuating in a longer cycle.

### <Modulation pattern 4: the degree of a fluctuation is large, and the symmetry of the fluctuation is high.>

The objective variable Y is largely fluctuating in a short cycle, and the level thereof is stable in a longer cycle.

It can be said that the objective variable Y in the modulation pattern 2 is suitable as a criterion for calculating the biodiversity credit. In contrast, it can be said that the objective variable Y in modulation pattern 3 is the least suitable.

### (Equilibrium Point Transition)

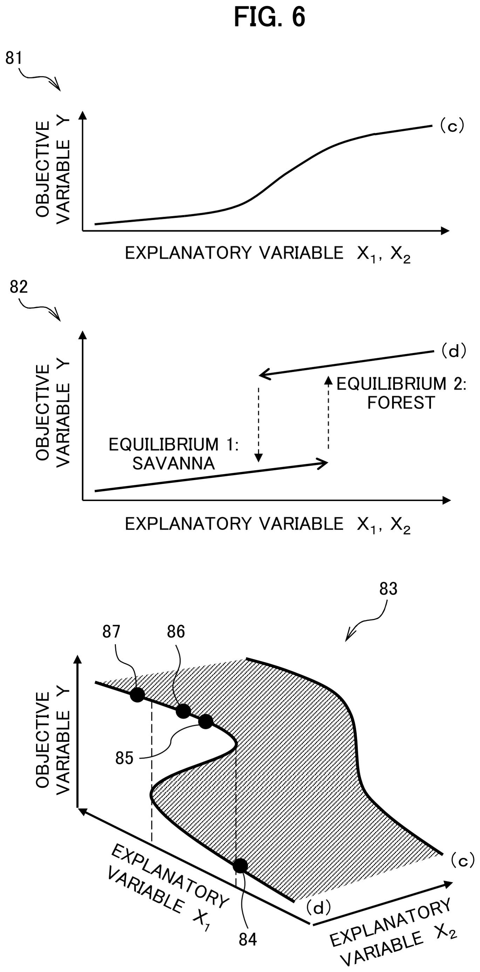

FIG. 6 is a diagram for explaining an equilibrium point transition. In the case where a conservation action is performed on a forest, as the value of the explanatory variable X₁ (or X₂) which indicates the amount or quality of the conservation action increases, the value of the objective variable Y also increases. A graph 81 and a graph 82 briefly show this transition. As described above, the relation between the explanatory variable X₁ (or X₂) and the objective variable Y is not linear at all. In the case where the forest is initially in a "savanna" state, the speed at which the objective variable Y increases (an increase of the objective variable relative to a minute increase of the explanatory variable) is small. However, the speed rapidly increases after a certain time point as a boundary (the growth period of the forest). Then, the speed returns to substantially the initial level after another certain time point as a boundary.

A problem is a mode of the transition (equilibrium point transition) of the objective variable Y between two time points serving as the boundaries. In the case where the transition between two time points is gradual, the relation between the explanatory variable X₁ (or X₂) and the objective variable Y is as shown in the graph 81. A curve as in the graph 81 is generally called a logistic curve (c).

In the case where the transition between two time points is abrupt, the relation between the explanatory variable X₁ (or X₂) and the objective variable Y is as shown in the graph 82. A curve as in the graph 82 is generally called a hysteresis curve (d). Note that in FIG. 6, the hysteresis curve is expressed as two straight lines because of limitation in drawing technique. Two dashed arrows in the up-down direction mean that the value of the objective variable Y is influenced by not only the current value of the explanatory variable X₁ (or X₂) but also the past value of the explanatory variable X₁ (or X₂).

A graph 83 is a graph in which in a coordinate space having an explanatory variable X₁, an explanatory variable X₂, and an objective variable Y as three axes, a model "Y=F(X₁,X₂)" which indicates relations among these three variables is drawn. The model here is a solid figure like a "flying carpet". When this solid figure is projected onto a plane having the explanatory variable X₁ and the objective variable Y as axes, a relation between the explanatory variable X₁ and the objective variable Y appears on the plane. When this solid figure is projected onto a plane having the explanatory variable X₂ and the objective variable Y as axes, a relation between the explanatory variable X₂ and the objective variable Y appears on the plane. In FIG. 6, such relations are not drawn because of limitation in drawing.

The graph 83 does not have a time axis. However, it is possible to consider the time in association with each point on the solid figure. For example, in the case where a company or the like increases the amount or quality of a conservation action in time series, at the start time point of the conservation action, the value of the explanatory variable X₁ is initially near "0", and the value of the explanatory variable X₂ is also near "0". Hence, the point indicating a combination of the values of the three variables moves on the surface of the solid figure in a direction from the lower left corner on the front side on the drawing toward the upper right corner on the rear side on the drawing. In other words, if this point is projected onto a horizontal plane, the point moves from the left side on the front side to the right side on the rear side in time series. If this point is projected onto a vertical plane, the point moves from the lower side to the upper side in time series.

For simplifying the description, it is assumed that the value of the explanatory variable X₂ is now fixed to a relatively small first value. Then, when the objective variable Y is in the modulation pattern 2, points indicating the combinations of the values of the three variables are, for example, a point 84 and a point 87 on a curve (d). When the objective variable Y is in the modulation pattern 3, points indicating the combinations of the values of the three variables are, for example, a point 85 and a point 86 on the curve (d). The time proceeds in the order of the point 84-the point 85-the point 86-the point 87.

Moreover, it is assumed that the value of the explanatory variable X₂ is fixed to a relatively large second value. Then, the above-described point 84, point 85, point 86, and point 87 move on a curve (c). The curves (c) and (d) in the graph 83 correspond respectively to the graph 81 and the graph 82. Eventually points indicating the combinations of the values of the three variables ascend while moving in the front, rear, vertical, and horizontal directions at random, on the flying carpet having a lateral width.

### (Processing Procedure)

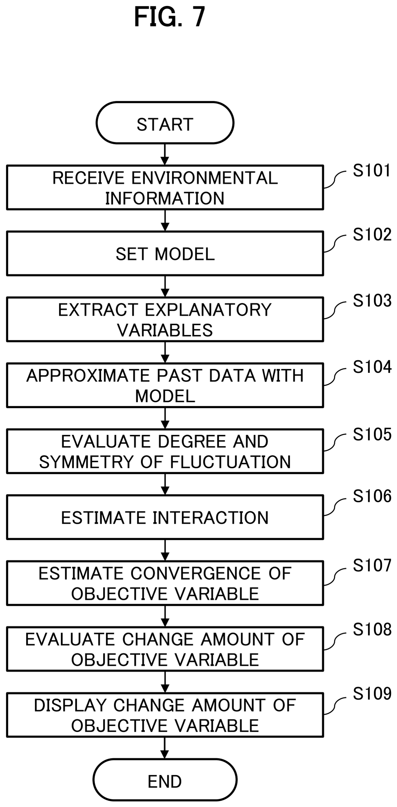

FIG. 7 is a flowchart of a processing procedure. As the premise that the processing procedure starts, it is assumed that the data collecting unit 24 has stored various pieces of environmental information obtained from the measurement instruments 43a, 43b, and 43c as well as the external device 2 in the environmental information database 31 in time series. The environmental information stored here includes one or more objective variables and one or more explanatory variables.

In step S101, the input processing unit 21 of the environment evaluation device 1 receives environmental information. Specifically, the input processing unit 21 firstly obtains environmental information stored in the environmental information database 31.

Secondly, the input processing unit 21 receives, via the input device 12, one objective variable designated by a user as a criterion for calculating a biodiversity credit from among the one or more objective variables. For the convenience of description, here, it is assumed that an objective variable Yₚ has been designated. Note that the input processing unit 21 may receive a conservation-target site designated by the user, propose, to the user, candidates for a combination of a conservation target and an objective variable according to the received conservation-target site, and receive a certain combination selected by the user from the candidates.

In step S102, the environment evaluation processing unit 22 of the environment evaluation device 1 sets a model 32. Specifically, the environment evaluation processing unit 22 prepares, for example, a model 32 which is a differential equation of a dynamical model. The model 32 contains an objective variable Yₚ, a plurality of explanatory variables, and parameters (coefficients to the explanatory variables and the like). The environment evaluation processing unit 22 can draw the model 32 as a certain solid figure (manifold) in a multi-dimensional space having the objective variable Yₚ and the plurality of explanatory variables as axes. The shape and position of the solid figure are determined by specific values of the parameters.

The differential equation of the dynamical model is, for example, an equation of motion. As represented as "force=mass×acceleration", the equation of motion has, as variables, an acceleration as a second-order time derivative of the positional coordinates, a mass, and a force (kinetic energy). For example, a differential equation of a dynamical model can be used as the model 32 of the present embodiment by replacing the mass with the mass (or the area) of the forest or the like of the conservation target, replacing the positional coordinates with the objective variable, and replacing the force with the explanatory variables.

In step S103, the environment evaluation processing unit 22 extracts explanatory variables. Specifically, the environment evaluation processing unit 22 receives, via the input device 12, a predetermined number of (for example, two) explanatory variables extracted by the user from a plurality of explanatory variables. For the convenience of description, it is assumed that the user has extracted X_{q} and Xᵣ as explanatory variables particularly to be analyzed.

In step S104, the environment evaluation processing unit 22 approximates past data with the model 32. Specifically, the environment evaluation processing unit 22 optimizes the values of parameters of the model 32 through machine learning (multiple regression analysis) using supervised learning data which is a set of combinations of values of the objective variable Yₚ, values of the explanatory variable X_{q}, and values of the explanatory variable Xᵣ in time series in the past. The model 32 in which the values of the parameters have been optimized is called an "approximate model". The approximate model accurately approximates the time-series relations among the objective variable Yₚ, the explanatory variable X_{q}, and the explanatory variable Xᵣ in the past. The environment evaluation processing unit 22 can draw the approximate model in a three-dimensional space. The environment evaluation processing unit 22 associates each "point" configuring the approximate model with "(X_{q},Xᵣ,Yₚ,time)".

In step S105, the environment evaluation processing unit 22 evaluates the degree and the symmetry of a fluctuation. Specifically, firstly, the environment evaluation processing unit 22 analyzes the shape and position of the approximate model to create a graph 71 of FIG. 5, and obtains the degree of the fluctuation of the objective function Yₚ for each time window. The degree of the fluctuation is a representative value (the maximum value, the average value, or the like) of the dispersion (amplitude) of the objective variable Yₚ. The time window is, for example, each section cut out in a predetermined length, such as one day, one week, or the like, from continuous time. The environment evaluation processing unit 22 determines whether or not the degree of the fluctuation is smaller than a predetermined first threshold for each time window, and holds the result. As described above, in the case where the above-described model is a dynamical model, the calculation of the degree of the fluctuation means nothing other than the calculation of a magnitude of change in time derivative of a differential equation of the dynamical model.

Secondly, the environment evaluation processing unit 22 analyzes the shape and position of the approximate model to create a graph 72 of FIG. 5, determines whether or not the symmetry of the fluctuation is higher than a predetermined second threshold for each time window, and holds the result. Here, the expression "create a graph 72" means that it is unclear, before the creation, which the result of creation is, the graph 72a or the graph 72b. The environment evaluation processing unit 22 draws an ellipse which envelops points distributed near the 45-degree line of the graph 72, and obtains the ratio of the length of the long axis of the ellipse to the length of the short axis as the symmetry of the fluctuation. Upon this, in the case where the symmetry falls within a range of the second threshold "1±α", the environment evaluation processing unit 22 determines that the symmetry is high, and holds the result. For example, α=0.1.

Thirdly, the environment evaluation processing unit 22 creates evaluation result information "[Wₙ,Aₙ,Sₙ]=[W₁,A₁,S₁], [W₂,A₂,S₂], [W₃,A₃,S₃],..." based on the "first" and "second" results in step S105, and temporarily holds the evaluation result information. Wₙ is the nth (n=1, 2, 3, ...) time window. Aₙ is a result of comparing the degree of the fluctuation with the first threshold in the nth time window, and takes either "small" or "large". "small" indicates that the degree of the fluctuation is smaller than the first threshold, and "large" indicates the other cases. Sₙ is a result of comparing the symmetry of the fluctuation with the second threshold in the nth time window, and takes either "high" or "low". "high" indicates that the symmetry of the fluctuation falls within the range of the second threshold, and "low" indicates the other cases.

In step S106, the environment evaluation processing unit 22 estimates an interaction. Specifically, the environment evaluation processing unit 22 creates the graph 51 of FIG. 3 for each of an explanatory variable X_{q} and an explanatory variable Xᵣ by using the approximate model. The environment evaluation processing unit 22 calculates a correlation between the explanatory variable X_{q} and the explanatory variable Xᵣ, and holds the calculation result. The correlation thus calculated takes a value from "-1" to "1", and the larger the absolute value is, the larger the degree of the correlation is (positive correlation or negative correlation). As described above, the calculation of this correlation means nothing other than the calculation of a coefficient between two variables in the differential equation of the dynamical model.

In step S107, the environment evaluation processing unit 22 estimates convergence of the objective variable. Specifically, firstly, the environment evaluation processing unit 22 obtains the evaluation result informations "[Wₙ,Aₙ,Sₙ]" which have been temporarily held, and reads out the first [ ], the second [ ], the third [ ], ... in order. When attention is paid to Aₙ, it is empirically known that as n increases, "small" continues at the beginning, then "large" continues, and lastly "small" continues again. When attention is paid to Sₙ, it is empirically known that as n increases, "high" continues at the beginning, then "low" continues, and lastly "high" continues again. Here, in the case where time windows in which Aₙ is "large" and Sₙ is "low" successively continue, the objective variable Yₚ is in a transition period in these time windows. This transition period corresponds to the "transition period" of FIG. 2 and (b) of the graph 61 of FIG. 4.

Secondly, the environment evaluation processing unit 22 determines, as a "re-equilibrium time window W_{*}", Wₙ that is temporally later among "Wₙ that became "small" for the first time after Aₙ became "large"" and "Wₙ that became "high" for the first time after Sₙ became "low"". The environment evaluation processing unit 22 evaluates that the objective variable has converged in the "re-equilibrium time window W_{*}".

Thirdly, the environment evaluation processing unit 22 pays attention to correlation between the explanatory variable X_{q} and the explanatory variable Xᵣ, as well as the coefficient of the explanatory variable X_{q} and the coefficient of the explanatory variable Xᵣ in the approximate model after the "re-equilibrium time window W_{*}". Upon this, the environment evaluation processing unit 22 checks whether or not the following conditions 1 to 3 have been established among these.
<Condition 1> The correlation is acknowledged between the explanatory variable X_{q} and the explanatory variable Xᵣ.
<Condition 2> The time-series transition of the sign of the coefficient of the explanatory variable X_{q} is "(tₙ, tₙ₊₁, tₙ₊₂, tₙ₊₃, tₙ₊₄, ...) = (positive, negative, positive, negative, ...)".
<Condition 3> The time-series transition of the sign of the coefficient of the explanatory variable Xᵣ is "(tₙ, tₙ₊₁, tₙ₊₂, tₙ₊₃, tₙ₊₄, ...) = (negative, positive, negative, positive, ...)".

The condition 2 and the condition 3 are conditions that in a predetermined number of successive time windows, the signs of two explanatory variables appear in a second-order phase transition manner and in such a manner as to cancel each other with respect to an objective variable. In this case, there is a higher possibility that the objective variable Yₚ has converged. Note that the "third" processing of step S107 is an option. The environment evaluation processing unit 22 may determine that the objective variable has converged without performing the "third" processing of step S107. The environment evaluation processing unit 22 may determine that the objective variable has converged for the first time in the case where the conditions 1 to 3 are also satisfied as well after evaluating that the objective variable has converged in the "second" processing of step S107.

More generally, the environment evaluation processing unit 22 may determine that the objective variable has converged in the case where the absolute value of δY_{P}/δt becomes smaller than a predetermined threshold.

In step S107, the environment evaluation processing unit 22 traces the shape of the non-linear model approximated in the coordinate space to find an equilibrium (convergence) point of the objective variable. The partial (local) shape of a non-linear model is affected by evaluation results of the degree of the fluctuation and the symmetry of the fluctuation as well as the estimated interaction. That is, the environment evaluation processing unit 22 estimates a time point at which the value of the objective variable converges in a non-linear model and the value of the objective variable which converges, based on the evaluation results of the degree of the fluctuation and the symmetry of the fluctuation as well as the estimated interaction.

In step S108, the environment evaluation processing unit 22 evaluates a change amount of the objective variable. Specifically, the environment evaluation processing unit 22 obtains Y_{*} corresponding to W_{*}, and calculates ΔY=Y_{*}-Y₀.

In step S109, the output processing unit 23 of the environment evaluation device 1 displays the change amount of the objective variable. Specifically, the output processing unit 23 displays the value of ΔY on the output device 13. Thereafter, the processing procedure is ended.

### (Modification 1: Future Application of Model)

In the above embodiment, the environment evaluation processing unit 22 looks back the values of the objective variable to the past, and determines at which time point the objective variable converged after the fact. However, it is also possible for the environment evaluation processing unit 22 to apply, in the future, an approximate model that learned by using previous values of an objective variable and previous values of explanatory variables. For example, the environment evaluation processing unit 22 calculates a length of a "transition period" from a conservation action start time point up to a "re-equilibrium time window W_{*}". Upon this, the environment evaluation processing unit 22 uses the value of an objective variable after the elapse of the transition period as a criterion for calculating a biodiversity credit in a future case having the same objective variable and explanatory variables as those of the above-described approximate model.

The environment evaluation processing unit 22 may extract, from a plurality of approximate models that learned by using past data, an approximate model in which at least part of a point group of an objective variable and explanatory variables as specific future (prediction) data are similar. The environment evaluation processing unit 22 determines a future time point corresponding to a "re-equilibrium time window W_{*}" in the extracted approximate model.

### (Modification 2: Credit Granting Unit)

A biodiversity credit is a target of transaction. In the case where a doubt has occurred in the account settlement of a certain company, the fluidity of securities issued by this company in the market is very low. In the same manner, the fluidity of a biodiversity credit depends on "reliability" of the method for determining ΔY. The reliability can be defined in various ways. Reliability as an example of these is a weighted average of the number of samples and the degree of convergence. The larger the number of samples is and the larger the degree of convergence is, the larger the reliability is.

The number of samples is the number of items of the above-described evaluation result information "[Wₙ,Aₙ,Sₙ]=[W₁,A₁,S₁], [W₂,A₂,S₂], [W₃,A₃,S₃], ...", that is, the number of time windows. The larger the number of samples M is, the more statistically significant ΔY is.

The degree of convergence is a weighted average of the degree of the fluctuation and the symmetry of the fluctuation in the "re-equilibrium time window W_{*}". The smaller the degree of the fluctuation is and the higher the symmetry of the fluctuation is, the larger the degree of convergence is. The larger the degree of convergence is, the more statistically significant ΔY is.

In step S109, the credit granting unit 25 of the environment evaluation device 1 calculates increase or decrease of the biodiversity credit by multiplying ΔY by a predetermined conversion coefficient. At this time, the credit granting unit 25 calculates reliability based on the number of samples and the degree of convergence. The output processing unit 23 displays the calculated reliability together with the increase or decrease of the biodiversity credit on the output device 13. In the case where the reliability is less than a predetermined threshold, the credit granting unit 25 may display a warning on the output device 13. Examples of the warning include "The fluidity of the biodiversity credit seems to be low", "The biodiversity credit is unlikely to become a transaction target", and the like.

Note that there are a variety of specific methods for calculating a biodiversity credit based on a change amount of an objective variable. Moreover, the biodiversity credit may be calculated as a monetary value, or may be calculated as an imputed value (imputed price) that cannot be expressed as a simple monetary value. Incidentally, as an example of calculating a biodiversity credit as an imputed price, there is JP2024-139039 for which the applicant and some of the inventors are common with the present application.

### (Modification 3: Repetitive Processing)

In step S109 of the above-described Modification 2, in the case where the credit granting unit 25 has displayed a warning, the processing returns to step S101. Thereafter, the processing from step S101 to step S109 is repeated until the credit granting unit 25 stops displaying a warning in step S109 through which the processing passed again. During this time, the user changes the type of the objective variable and the types of the explanatory variables in each case. Moreover, the user changes the number of samples, the length of time windows, and the like in each case.

Then, in step S109 of each repetitive loop, the credit granting unit 25 calculates reliability. The credit granting unit 25 may display a plurality of combinations of "(increase or decrease of biodiversity credit and reliability)" on the output device 13 in descending order of reliability. The reliability here is also a priority for the user to put the biodiversity credit on the market.

### (Effects of Embodiments)

(1) The environment evaluation device can accurately evaluate a criterion for calculating a biodiversity credit by approximating a change of an ecosystem by using a non-linear model.
(2) The environment evaluation device can calculate a biodiversity credit.
(3) The environment evaluation device can evaluate reliability of an objective variable.
(4) The environment evaluation device can evaluate reliability by using the degree and the symmetry of a fluctuation.
(5) The environment evaluation device can use a dynamic model having versatility.
(6) The environment evaluation device can accurately define the degree and the symmetry of a fluctuation.
(7) The environment evaluation device can accurately define convergence of an objective variable.

Although several embodiments of the present invention have been described, these embodiments are presented as examples, and do not limit the scope of the invention. These novel embodiments can be implemented in other various modes, and various omissions, replacements, and changes can be made without departing from the gist of the invention. These embodiments and their modifications are encompassed in the scope and gist of the invention, and are also encompassed in the scope of the invention described in Claims and equivalents thereof.

### Description of Reference Signs

1 environment evaluation device
2 external device
3 network
11 central control device
12 input device
13 output device
14 main storage device
15 auxiliary storage device
16 communication device
21 input processing unit
22 environment evaluation processing unit
23 output processing unit
24 data collecting unit
25 credit granting unit
31 environmental information database
32 model
41 measurement condition controller
42, 42a, 42b, 42c measurement condition modulator
43, 43a, 43b, 43c measurement instrument

## Claims

1. An environment evaluation device (1) **characterized in that** the environment evaluation device (1) comprises:
an input processing unit (21) which receives environmental information on an environment of a site which is an analysis target, and an objective variable serving as a criterion for calculating a biodiversity credit, in the environmental information;
an environment evaluation processing unit (22) which
sets a non-linear model (32) having, as output, the objective variable, and as input, a plurality of explanatory variables indicating an amount or quality of a conservation action which is performed by a person on an ecosystem, in the environmental information,
receives explanatory variables of the analysis target which are extracted by a user from among the plurality of explanatory variables,
approximates, with the non-linear model (32), time-series relations among the objective variable and the explanatory variables of the analysis target by learning with time-series past values of the objective variable and the explanatory variables of the analysis target,
evaluates a degree of a fluctuation and a symmetry of the fluctuation of the objective variable based on the approximated non-linear model (32),
estimates an interaction between the explanatory variables of the analysis target based on the approximated non-linear model (32),
estimates a time point at which a value of the objective variable converges in the non-linear model (32), and the value of the objective variable which converges, based on a result of the evaluation of the degree of the fluctuation and the symmetry of the fluctuation, as well as, the estimated interaction, and
evaluates, based on the value of the objective variable which converges, a change amount of the objective variable which non-linearly transitions relative to the explanatory variables of the analysis target; and
an output processing unit (23) which displays the change amount of the objective variable which has changed by the time point at which the value of the objective variable converges.

2. The environment evaluation device (1) according to claim 1, **characterized in that**
the environment evaluation device (1) comprises a credit granting unit (25) which calculates increase or decrease of the biodiversity credit corresponding to the change amount of the objective variable, and
the output processing unit (23) displays the calculated increase or decrease of the biodiversity credit.

3. The environment evaluation device (1) according to claim 2, **characterized in that**
the credit granting unit (25) calculates reliability of the change amount of the objective variable changed by the time point at which the value of the objective variable converges.

4. The environment evaluation device (1) according to claim 3, **characterized in that**
the reliability is a weighted average of the degree of the fluctuation and the symmetry of the fluctuation of the objective variable.

5. The environment evaluation device (1) according to claim 1, **characterized in that**
the non-linear model (32) is a dynamical model.

6. The environment evaluation device (1) according to claim 1, **characterized in that**
the degree of the fluctuation of the objective variable is dispersion of the objective variable which fluctuates in time series,
the symmetry of the fluctuation of the objective variable is appearance of sample points on a coordinate plane using, as axes, a value of the objective variable at time point t and a value of the objective variable at time point t+1, and
in a case where the sample points are distributed along a symmetry line serving as a rough indication for the symmetry of appearance of the sample points on the coordinate plane, the environment evaluation processing unit (22) evaluates that the symmetry is low, and in a case where the sample points are concentrated in surroundings of a certain point on the symmetry line, the environment evaluation processing unit (22) evaluates that the symmetry is high.

7. The environment evaluation device (1) according to claim 6, **characterized in that**
the environment evaluation processing unit (22)
obtains, in time series, combinations of how large the degree of the fluctuation is and how high the symmetry of the fluctuation is,
evaluates that the objective variable has converged at a time point which is temporally later among a time point at which the degree of the fluctuation has become small for the first time after the degree of the fluctuation became large, and a time point at which the symmetry of the fluctuation has become high for the first time after the symmetry of the fluctuation became low, and
uses a value of the objective variable at the time point which is temporally later as a criterion for calculating the biodiversity credit.

8. An environment evaluation method **characterized in that** the environment evaluation method comprises:
causing an input processing unit (21) of an environment evaluation device (1) to receive environmental information on an environment of a site which is an analysis target, and an objective variable serving as a criterion for calculating a biodiversity credit, in the environmental information;
causing an environment evaluation processing unit (22) of the environment evaluation device (1) to
set a non-linear model (32) having, as output, the objective variable, and as input, a plurality of explanatory variables indicating an amount or quality of a conservation action which is performed by a person on an ecosystem, in the environmental information,
receive explanatory variables of the analysis target which are extracted by a user from among the plurality of explanatory variables,
approximate, with the non-linear model (32), time-series relations among the objective variable and the explanatory variables of the analysis target by learning with time-series past values of the objective variable and the explanatory variables of the analysis target,
evaluate a degree of a fluctuation and a symmetry of the fluctuation of the objective variable based on the approximated non-linear model (32),
estimate an interaction between the explanatory variables of the analysis target based on the approximated non-linear model (32),
estimate a time point at which a value of the objective variable converges in the non-linear model (32), and the value of the objective variable which converges, based on a result of the evaluation of the degree of the fluctuation and the symmetry of the fluctuation, as well as the estimated interaction, and
evaluate, based on the value of the objective variable which converges, a change amount of the objective variable which non-linearly transitions relative to the explanatory variables of the analysis target; and
causing an output processing unit (23) of the environment evaluation device (1) to display the change amount of the objective variable which has changed by the time point at which the value of the objective variable converges.
